# EUROPÄISCHE PATENTANMELDUNG

(11) **EP 2 930 320 A1**
(43) Veröffentlichungstag der Anmeldung: **14.10.2015**
(21) Anmeldenummer: 14163721.5
(22) Anmeldetag: 07.04.2014
(51) Int. Cl.: F01K 13/02, F01K 23/10, F01K 23/16

(54) **Verfahren zum Betreiben einer Dampfturbine**

(71) Anmelder: Siemens Aktiengesellschaft, 80333 München (DE)
(72) Erfinder: Greis, Jan, 47167 Duisburg (DE); Rühle, Tobias, 45147 Essen (DE); Wendt, Steffen, 45130 Essen (DE)

(57) **Zusammenfassung**

Die Erfindung betrifft ein Verfahren zum Betreiben einer Dampfturbine (4), wobei die Dampfturbine (4) auf eine Nenndrehzahl durch eine Vorrichtung, wie zum Beispiel eine Gasturbine (2) oder einen Generator (3, 3a, 3b), beschleunigt wird.

## Beschreibung

Die Erfindung betrifft ein Verfahren zum Betreiben einer Dampfturbine.

Eine Dampfturbine umfasst im Wesentlichen einen drehbar gelagerten Rotor und ein um den Rotor angeordnetes Gehäuse.

Sowohl der Rotor als auch das Gehäuse werden aus einem geeigneten Material hergestellt und weisen ein hohes Gewicht auf. Dies führt unter anderem dazu, dass die Erwärmung und Abkühlung der Dampfturbine vergleichsweise lange dauert.

Außerdem können Dampfturbinen erst nach Erreichen von definierten Dampfparametern des Dampfes, der der Dampfturbine zugeführt wird, beschleunigt werden. Bis eine Dampfturbine ihre Nenndrehzahl erreicht können mehrere Minuten, in manchen Fällen bis zu sechs Minuten vergehen.

In Gas- und Dampfturbinenanlagen wird eine Gasturbine unter anderem dazu verwendet, mit dem Heißgas in einem Dampferzeuger Dampf für die Dampfturbine zu erzeugen. In solchen Gas- und Dampfturbinenanlagen wird zuerst die Gasturbine und erst nach Erreichen von definierten Dampfparametern des Dampfes die Dampfturbine gestartet.

Dies dauert vergleichsweise lang. Je schneller ein Kraftwerk an ein Versorgungsnetz angeschlossen werden kann, umso besser.

Hier möchte die Erfindung Abhilfe schaffen. Es ist daher Aufgabe der Erfindung, eine schnelle Ankopplung eines Kraftwerkes an ein Versorgungsnetz zu ermöglichen.

Gelöst wird diese Aufgabe durch ein Verfahren zum Betreiben einer Dampfturbine, wobei die Dampfturbine auf eine Nenndrehzahl durch eine Vorrichtung beschleunigt wird.

Vorteilhafte Weiterbildungen sind in den Unteransprüchen angegeben.

Die Erfindung geht von dem Gedanken aus, dass die benötigte Zeit zum Beschleunigen der Dampfturbine eingespart werden kann, wenn die Dampfturbine bereits vor Erreichen der erforderlichen Dampfparameter auf Nenndrehzahl gebracht werden kann.

In einer ersten vorteilhaften Weiterbildung sieht die Erfindung vor, dass die Vorrichtung als Gasturbine ausgebildet wird und die Drehmomentübertragung über eine schaltbare Kupplung erfolgt.

Durch Einstellen des Drehmoments kann die Dampfturbine zu einem gewünschten Zeitpunkt auf eine Nenndrehzahl beschleunigt werden.

Die Nenndrehzahl ist die Drehzahl, bei der die Dampfturbine bei Volllast die größte mögliche Leistung, die Nennleistung, abgibt. In bevorzugten Ausführungsformen liegt die Nenndrehzahl bei 25Hz, 30Hz, 50Hz oder 60Hz.

In einer vorteilhaften Weiterbildung ist die schaltbare Kupplung als eine hydrodynamische Kupplung ausgebildet.

Die Kupplung kann als eine Kupplung ausgebildet sein, die eine reibschlüssige oder elektromagnetische Verbindung darstellt.

In einer vorteilhaften Weiterbildung kann bei Erreichen der Nenndrehzahl ein Formschluss zur Übertragung der vollen Wellenleistung und zur Vermeidung von Schlupf erfolgen.

In einer besonders vorteilhaften Weiterbildung wird die Vorrichtung als Generator ausgebildet. Dies ist eine Möglichkeit, insbesondere bei Mehrwellenanlagen, die Dampfturbine auf Nenndrehzahl zu beschleunigen. Der Generator dient hierbei als Motor und entnimmt aus dem elektrischen Netz die dafür benötigte Leistung.

In einer vorteilhaften Weiterbildung wird als elektrisches Netz das Kraftwerks-Netz verwendet.

Das erfindungsgemäße Verfahren sieht vor, dass die Dampfturbine evakuiert ist, um zum einen die Beschleunigungsleistung und zum anderen eine mögliche Gefährdung durch Ventilation zu vermeiden.

Durch das erfindungsgemäße Verfahren ist eine Flexibilisierung des gesamten GuD-Blocks möglich. Die Erfindung sieht vor, durch das Beschleunigen der Dampfturbine auf Nenndrehzahl ohne Dampf die Blockanfahrzeiten zu verkürzen. Dadurch kann die Dampfturbine zum Zeitpunkt des Anstoßens Direktleistung aufnehmen.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: eine einwellige GUD-Anlage,
- Figur 2: eine zweiwellige GUD-Anlage.

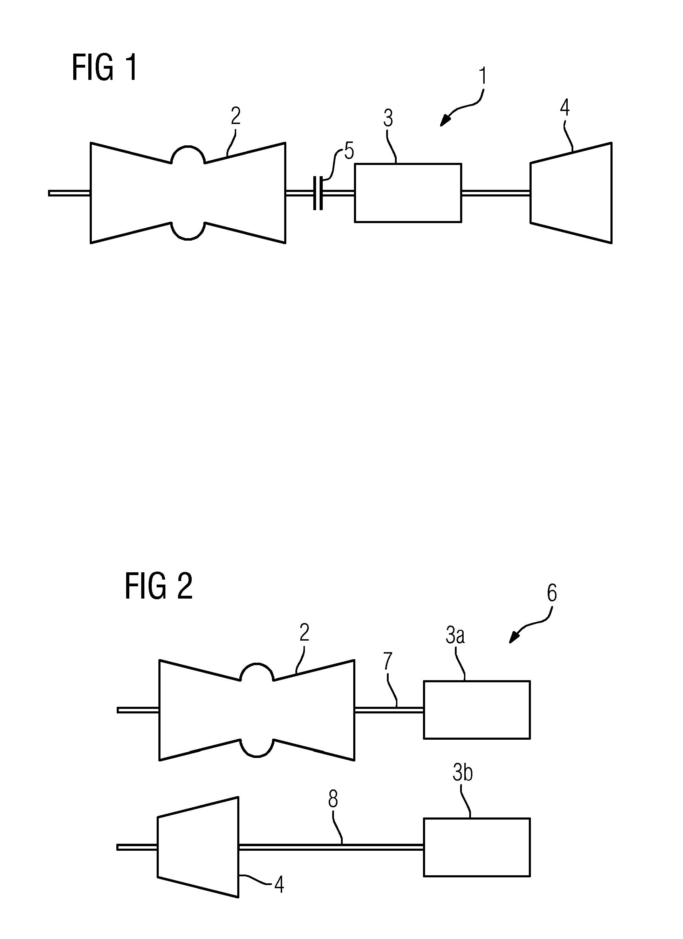

Die Figur 1 zeigt eine einwellige GUD-Anlage 1, die im Wesentlichen eine Gasturbine 2, einen Generator 3 und eine Dampfturbine 4 umfasst. Zwischen der Gasturbine 2 und dem Generator 3 ist eine Kupplung 5 angeordnet. Die Kupplung 5 dient zur Drehung und Übertragung und ist schaltbar ausgeführt. Die Kupplung 5 ist als eine hydrodynamische Kupplung ausgebildet.

In alternativen Ausführungsformen ist die Kupplung als eine Kupplung ausgebildet, die eine reibschlüssige oder elektromagnetische Verbindung darstellt.

Der Übersichtlichkeit wegen ist die komplette Dampferzeugung nicht näher dargestellt.

Die Nenndrehzahl liegt hierbei bei 25Hz, 30Hz, 50Hz oder 60Hz.

Die Figur 2 zeigt eine zweiwellige GUD-Anlage 6. Hierbei ist die Gasturbine 3 über eine Welle 7 direkt an den Generator 3a angekoppelt. Die Dampfturbine 4 ist über eine zweite Welle 8 an einen weiteren Generator 3b angekoppelt. Bezogen auf Figur 1 wird die Dampfturbine 4 folgendermaßen betrieben: Die Dampfturbine 4 wird auf eine Nenndrehzahl durch eine Vorrichtung beschleunigt, wobei die Vorrichtung die Gasturbine 2 ist. Dabei erfolgt die Drehung mit Übertragung über die schaltbare Kupplung 5.

Sobald die Nenndrehzahl erreicht wird, erfolgt ein Formschluss in der Kupplung 5.

Bezogen auf die zweiwellige Ausführung des GUD-Dampfkraftwerks wird die Dampfturbine 4 auf eine Nenndrehzahl durch eine Vorrichtung beschleunigt, wobei die Vorrichtung in diesem Fall der Generator 3b ist. Die dafür benötigte elektrische Leistung für den Generator 3b wird aus einem elektrischen Netz entnommen. Dabei wird das Kraftwerks-Netz als elektrisches Netz verwendet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Dampfturbine (4),
wobei die Dampfturbine (4) auf eine Nenndrehzahl durch eine Vorrichtung beschleunigt wird.

2. Verfahren nach Anspruch 1,
wobei die Vorrichtung als Gasturbine (2) ausgebildet wird und die Drehmomentübertragung über eine schaltbare Kupplung (5) erfolgt.

3. Verfahren nach Anspruch 2,
wobei die schaltbare Kupplung (5) als eine hydrodynamische Kupplung ausgebildet wird.

4. Verfahren nach Anspruch 2 oder 3,
wobei ein Formschluss in der Kupplung (5) erfolgt, sobald die Nenndrehzahl erreicht wurde.

5. Verfahren nach Anspruch 1,
wobei die Vorrichtung als Generator (3) ausgebildet wird.

6. Verfahren nach Anspruch 5,
wobei die elektrische Leistung für den Generator (3) aus einem elektrischen Netz entnommen wird.

7. Verfahren nach Anspruch 6,
wobei als elektrisches Netz das Kraftwerks-Netz verwendet wird.

8. Verfahren nach einem der vorhergehenden Ansprüche,
wobei die Nenndrehzahl bei 25Hz, 30Hz, 50Hz oder 60Hz liegt.
